(19)

**Europäisches Patentamt**
**European Patent Office**
**Office européen des brevets**

(11) **EP 4 531 174 A2**

(12) **EUROPEAN PATENT APPLICATION**

(43) Date of publication:
**02.04.2025 Bulletin 2025/14**

(21) Application number: **24203112.8**

(22) Date of filing: **27.09.2024**

(51) International Patent Classification (IPC):
***H01M 50/148*** (2021.01)      ***H01M 50/166*** (2021.01)

(52) Cooperative Patent Classification (CPC):
**H01M 50/148; H01M 50/166; H01M 50/474;**
**H01M 50/586; H01M 50/593;** Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.09.2023  CN 202322678276 U**
**19.08.2024  PCT/CN2024/113006**

(71) Applicants:
• **Huizhou EVE Power Co., Ltd**
**Tonghu Town, Zhongkai High-tech District**
**Huizhou, Guangdong 516039 (CN)**

• **Eve Power Co., Ltd.**
**Jingmen, Hubei 448000 (CN)**

(72) Inventors:
• **FAN, Weicheng**
**Huizhou, Guangdong, 516039 (CN)**
• **ZHAO, Fenfen**
**Huizhou, Guangdong, 516039 (CN)**
• **ZHANG, Lei**
**Huizhou, Guangdong, 516039 (CN)**

(74) Representative: **Murgitroyd & Company**
**165-169 Scotland Street**
**Glasgow G5 8PL (GB)**

(54) **COVER ASSEMBLY, BATTERY AND BATTERY PACK**

(57)     Disclosed are a cover assembly, a battery and a battery pack. The cover assembly includes a cover body and an insulating member. The insulating member includes a connecting portion and a guide portion. The connecting portion is mounted to the cover body, the guide portion is provided in an annular shape and connected to a side of the connecting portion away from the cover body in a first direction. The guide portion is provided with a cavity and comprises a guide surface away from the cavity. The guide surface is an inclined surface. An orthographic projection of the guide surface in the first direction falls entirely within the connecting portion.

**EP 4 531 174 A2**

## Description

TECHNICAL FIELD

The present disclosure relates to batteries, and more particularly, to a cover assembly, a battery, and a battery pack.

BACKGROUND

In the related art, a cover assembly of an existing battery generally has a lower annular vertical surface that does not provide a guiding effect as the cover assembly enters into a housing of the battery.

However, there is a high requirement for a concentricity of the cover and the housing of the battery. Further, when the cover assembly is assembled with the housing, the arrangement of the vertical surface causes the housing to be susceptible to damage due to collision with the cover assembly, resulting in encapsulation defect.

SUMMARY

The present disclosure provides a cover assembly, a battery, and a battery pack, which can solve the damage of the housing due to the collision with the cover assembly.

According to a first aspect, the present disclosure provides a cover assembly, including a cover and an insulating member including a connecting portion and a guide portion. The connecting portion is mounted to the cover body, the guide portion is provided in an annular shape and connected to a side of the connecting portion away from the cover body in a first direction, and the guide portion is provided with a cavity and includes a guide surface away from the cavity. The guide surface is an inclined surface. An orthographic projection of the guide surface in the first direction falls entirely within the connecting portion.

According to a second aspect, the present disclosure provides a battery including the cover assembly according to the first aspect.

According to a third aspect, the present disclosure provides a battery pack including the battery according to the second aspect.

ADVANTAGEOUS EFFECTS

According to the embodiments of the present disclosure, the guide surface is provided on the guiding portion, so that when the cover body of the battery is mounted to a housing, the insulating member located on a side of the cover body close to the housing in the first direction X first enters the housing. At this time, an interval may be formed between the guide surface with the inclined surface and the housing, so that the guide portion does not damage the housing when entering the housing.

In addition, when the guide portion enters the housing, the cover body and the housing are kept in alignment with each other, so as to avoid damage caused by collision between the cover body and the housing, and to improve the closing between the cover body and the housing.

BRIEF DESCRIPTION OF THE DRAWINGS

FIG. 1 is a schematic cross-sectional view of a cover assembly according to some embodiments of the present disclosure.
FIG. 2 is a schematic cross-sectional view of an insulating member according to some embodiments of the present disclosure.
FIG. 3 is an enlarged schematic diagram at region A in FIG. 2.
FIG. 4 is a schematic diagram of an insulating member according to some embodiments of the present disclosure.

List of reference numerals:

1000. Cover assembly; 100. Insulating member; 200. Cover body; 1. Connecting portion; 2. Guide portion; 3. Cavity; 21. Guide surface; 22. First surface; 23. Abutment surface; 4. Groove; 5. Via hole; 6. Pressure relief hole.

DETAILED DESCRIPTION

In the description of the present disclosure, unless otherwise expressly defined and specified, the terms such as "couple", "connect", and "fix" are to be understood in a broad sense, for example, as a fixed connection, a detachable connection, an integrated unit, a mechanical connection, an electrical connection, a direct connection, an indirect connection by an intermediating medium, an internal communication between two elements, or interaction between two elements. For those of ordinary skill in the art, the specific meaning of the above terms in the present disclosure may be understood as appropriate.

In the present application, unless otherwise expressly defined and specified, the phrases, such as a first feature "above" or "below" a second feature, mean the first feature in direct contact with the second feature, or the first feature in indirect contact with the second feature by another feature(s) therebetween. In addition, the phrases, such as the first feature "above", "on" or "over" the second feature, mean the first feature being directly or obliquely above the second feature, or the first feature being located at a level higher than the second feature, and the phrases, such as the first feature "below", "under" or "beneath" the second feature, mean the first feature being directly or obliquely below the second feature, or the first feature being located at a level lower than the second feature.

In the description of embodiments, the terms, such as "up", "down", "left", "right", "front", "back", or other ones indicating orientations or positional relationships, are based on those shown in the accompanying drawings for the purpose of facilitating the description and simplifying the operation, and are not intended to indicate or imply that the devices or elements referred to must be provided at a special orientation, or constructed or operated with a special orientation. Thus, those terms are not to be construed as a limitation to the present disclosure. Furthermore, the terms "first" and "second" are used to distinguish similar features and do not imply that these features are in a particular order or sequence.

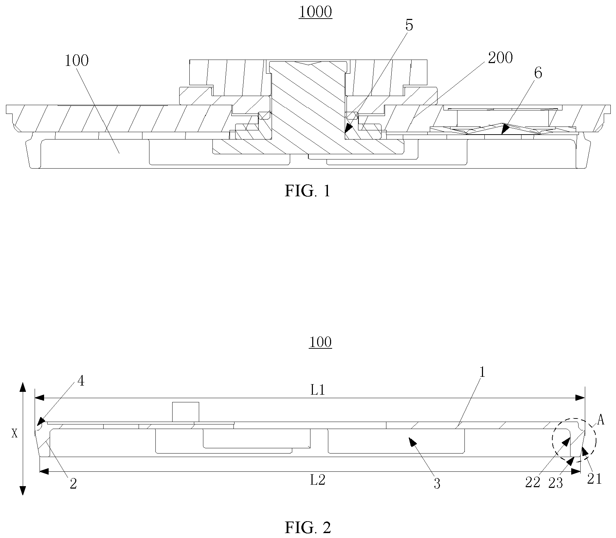

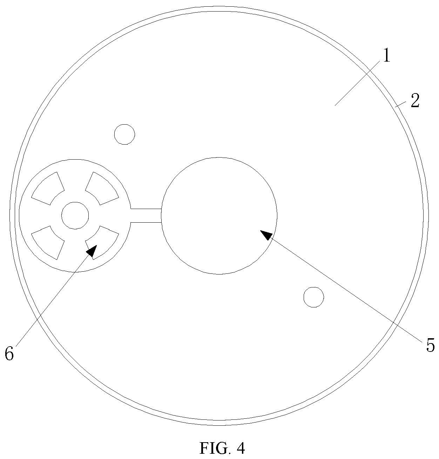

The present disclosure provides an insulating member. FIGs. 1 to 4 show an insulating member according to some embodiments of the present disclosure, in which the X direction is a first direction. The following descriptions are based on the first direction X.

Referring to FIGs. 1 to 4, the present disclosure provides a cover assembly 1000, including a cover body 200 and an insulating member 100. The insulating member 100 includes a connecting portion 1 and a guide portion 2. The connecting portion 1 is mounted on the cover body 200 of a battery. The guide portion 2 is provided in an annular shape and is connected to a side of the connecting portion 1 away from the cover body 200 in the first direction X. The guide portion 2 has a cavity 3 and a guide surface 21 away from the cavity 3. The guide surface 21 is of an inclined surface. An orthographic projection of the guide surface 21 in the first direction X falls within the connecting portion 1.

In the embodiments of the present disclosure, when the cover body 200 of the battery is mounted to a housing, the insulating member 100 located on a side of the cover body 200 close to the housing in the first direction X first enters the housing through the guide surface 21 of the guide portion 2. At this time, an interval may be formed between the guide surface 21 with the inclined surface and the housing, so that the guide portion 2 does not damage the housing when entering the housing. In addition, when the guide portion 2 enters the housing, the cover body 200 and the housing are kept in alignment with each other, so as to avoid damage caused by collision between the cover body 200 and the housing, and to improve the closing between the cover body 200 and the housing.

It is to be understood that after assembly of the cover body on the battery, the cavity 3 of the insulating member 100 can provide a space for accommodating the components of the battery, such as the tabs and busbars. In the present embodiment, the guide portion 2 is provided in an annular shape, and surrounds together with the connecting portion 1 the components such as the tabs and busbars, so that the components such as the tabs and busbars are spaced apart from the housing and the cover body 200 of the battery, thereby avoiding the risk of point discharge between the components such as the tabs and busbars and the housing or the cover body 200 of the battery.

A groove 4 is disposed on a side of the connecting portion 1 close to the cover body 200 in the first direction X. The groove 4 is provided in an annular shape. The groove 4 is disposed at a position corresponding to the guide portion 2 in the first direction X, that is, the groove 4 is provided in the first direction X opposite to the guide portion 2. When the cover body 200 is mounted on the housing of the battery, the guide portion 2 abuts against a battery cell in the housing of the battery. At this time, the groove 4 can provide a deformation space for the guide portion 2, so that the guide portion 2 does not expand toward the housing of the battery due to the pressing between the battery cell and the cover body 200 of the battery, thereby preventing the guide portion 2 from pressing the housing of the battery to eliminate welding defects, while preventing the insulating member 100, when being weld around the cover body 200, from thermally expanding and pressing a welding position between the housing and the cover body 200 of the battery.

The specific position of the guide portion 2 and the groove 4 on the connecting portion 1 is not limited, as long as the groove 4 is provided opposite to the guide portion 2 in the first direction X, so that the groove 4 can provide a deformation space for the guide portion 2. Therefore, the groove 4 and the guide portion 2 may be provided at a position close to a middle portion of the connecting portion 1 or close to a peripheral edge of the connecting portion 1. In some embodiments of the present disclosure, both the guide portion 2 and the groove 4 are provided at a position close to the peripheral edge of the connecting portion 1, so that the volume range of the cavity 3 can be increased while the groove 4 provides a deformation space for the guide portion 2.

In some embodiments of the present disclosure, the guide portion 2 and the groove 4 are disposed at the peripheral position of the connecting portion 1.

The shape of the groove 4 is not limited herein. For example, the groove 4 includes a right-angled groove, an arc-shaped groove, a special-shaped groove, or the like. In some embodiments of the present disclosure, the groove 4 is an arc-shaped groove. When the guide portion 2 deforms, the wall of an arc-shaped groove 4 is less prone to cracking than a right-angled groove 4 during the shrinking of the insulating member 100.

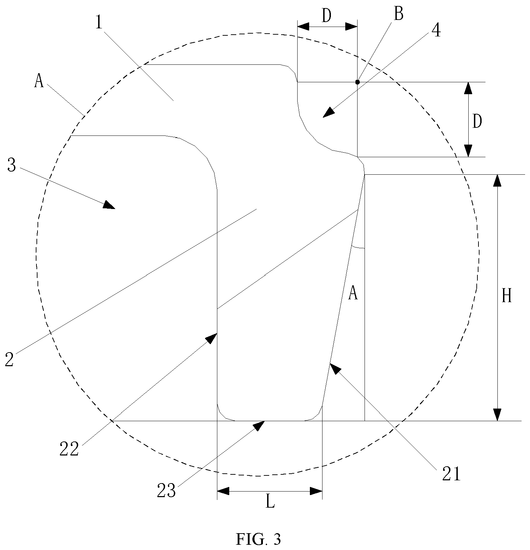

Referring to FIG. 3, in some embodiments of the present disclosure, the groove 4 is an arc-shaped groove. A distance from the arc-shaped wall of the groove 4 to a center B is D, satisfying 0.3 mm≤D≤0.5 mm. The distance D may be a linear distance from the wall of the part of the groove 4 to a plane where the center of the groove 4 is located, or a distance from the wall of the groove 4 to a certain point of the center of the groove 4.

In some embodiments of the present disclosure, the distance from all points on the wall of the groove 4 to the center B is equal to D. That is, D is a radius of the arc-shaped groove 4. If D is less than 0.3 mm, the size of the groove 4 is too small to accommodate the extrusion deformation amount of the insulating member 100, resulting in the pressing on the housing of the battery and welding defects; and if D is greater than 0.5 mm, the size of the groove 4 is too large, resulting in the structure strength of the insulating member 100 to be insufficient.

A height of the guide portion 2 in the first direction X is H, satisfying 1.8mm≤H≤2.5mm. It is to be understood that the height H of the guide portion 2 in the first direction X is related to the size of the cavity 3 formed by the guide portion 2. In the present embodiments, the height H ranges from 1.8mm to 2.5 mm, which can provide an air chamber space for the insulating member 100. If H is greater than 2.5 mm, it is disadvantageous to increase the capacity of the battery; and if H is less than 1.8 mm, an overflow phenomenon may occur during liquid injection into the battery.

In addition, a configuration in which the guide portion 2 is provided in an annular shape and includes the guide surface 21, and the orthographic projection of the guide surface 21 in the first direction X completely falls within the connecting portion 1 can be understood as a configuration in which the guide portion 2 is provided in a gradual contraction manner toward a direction away from the connecting portion 1 in the first direction X, so that the guide portion 2 has a guiding function when the cover body 200 is mounted on the battery housing.

An outer circumferential diameter of a side of the guide portion 2 close to the cover body 200 in the first direction X is L1, an outer circumferential diameter of another side of the guide portion 2 away from the cover body 200 in the first direction X is L2, and an angle between the guide surface 21 and the first direction X is A, in which L1, L2, H and A satisfy:

$$A = \tan^{-1}\frac{L1-L2}{2H}$$

. Here, the angle A between the guide surface 21 and the first direction X can be determined by the values of L1, L2 and H.

Moreover, the length L1 is designed in relation to the outer diameter of the cover body 200 of the battery, and can be calculated by determining a single-side gap between the insulating member 100 and the cover body 200. The length L1 is the outer circumferential diameter of the side of the guide portion 2 close to the cover body 200 in the first direction X, and also the outer circumferential diameter of the insulating member 100.

Here, the outer diameter of the cover body 200 is D1, the single-side gap between the insulating member 100 and the cover body 200 is d1, a concentricity of the insulating member 100 and the cover body 200 in the assembly process is g1, and a deformation variable of the outer diameter of the insulating member 100 is g2 after the cover body 200 and the housing are assembled, and the single-side gap value tolerance calculated by the root mean square is g3 based on the outer diameter tolerance of the insulating member 100 and the cover body 200, in which g1 satisfies 0≤g1≤0.5mm, g2 satisfies 0≤g2≤0.2mm, and g3 satisfies 0≤g3≤0.1mm. Furthermore, the single-side gap d1=g1+g2+g3, L1=D1-2d1.

Referring to FIGs. 2 to 3, the guide portion 2 further includes a first surface 22 that surrounds the cavity 3, and an abutment surface 23 that is spaced from the connection portion 1 in the first direction X. The abutment surface 23 is connected to the first surface 22 and the guide surface 21. The abutment surface 23 of the guide portion 2 is designed to provide a larger contact area between the insulating member 100 and the battery cell, compared to an end that is disposed on a side of the guide portion 2 away from the connection portion 1 in the first direction and abuts the battery cell. Therefore, the abutment surface 23 not only achieves a good fixing effect, but also reduces the pressure between the insulating member 100 and the battery cell, thereby avoiding damage to the battery cell.

A distance between the joint of the abutment surface 23 and the first surface 22 and the joint of the abutment surface 23 and the guide surface 21 is L, satisfying 0.5mm≤L≤0.8mm. If L is less than 0.5 mm, the area of the abutment surface 23 is too small, causing excessive pressure of the insulating member 100 to the battery cell during assembly, so that the battery cell is easily damaged. If L is greater than 0.8 mm, the requirements for accuracy of the assembly between the busbars and the insulating member 100 is increased, thereby increasing the risk of assembly failure.

It is to be understood that the insulating member 100 also includes a via hole 5 through which the battery posts pass and a pressure relief hole 6 for communicating with a pressure relief valve on the cover body 200.

Referring to FIG. 1, the present disclosure also provides a battery including the cover assembly 1000 as described above. The battery includes all the technical solutions in the above embodiments, and thus can achieve at least the advantages brought out by the technical solutions in the above embodiments. Details are not repeated herein.

The present disclosure also provides a battery pack including the battery as described above. The battery pack includes all the technical solutions in the above embodiments, and thus can achieve at least the advantages brought out by the technical solutions in the above embodiments. Details are not repeated herein.

**Claims**

1. A cover assembly comprising:

    a cover body (200); and
    an insulating member (100) comprising a connecting portion (1) and a guide portion (2), wherein the connecting portion (1) is mounted to the cover body (200), the guide portion (2) is provided in an annular shape and connected to a side of the connecting portion (1) away from the cover body (200) in a first direction, and the guide portion (2) comprises a cavity (3) and a guide surface (21) away from the cavity (3), wherein the guide surface (21) is an inclined surface, and

wherein an orthographic projection of the guide surface (21) in the first direction falls entirely within the connecting portion (1).

2. The cover assembly according to claim 1, wherein a groove (4) is disposed on a side of the connecting portion (1) close to the cover body (200) in the first direction,

wherein the groove (4) is disposed corresponding to the guide portion (2) in the first direction.

3. The cover assembly according to claim 2, wherein the guide portion (2) and the groove (4) are each disposed close to a periphery of the connecting portion (1).

4. The cover assembly according to claim 2, wherein the groove (4) is set as a right-angle groove, an arc-shaped groove or a special-shaped groove.

5. The cover assembly according to claim 4, wherein when the groove (4) is the arc-shaped groove, a radius D of the arc-shaped groove satisfies 0.3 mm ≤ D ≤ 0.5 mm.

6. The cover assembly according to claim 1, wherein a height of the guide portion (2) in the first direction is H and H satisfies

$$1.8 \text{ mm} \leq H \leq 2.5 \text{ mm}$$

7. The cover assembly according to claim 6, wherein an outer circumferential diameter of a side of the guide portion (2) close to the cover body (200) in the first direction is L1, an outer circumferential diameter of another side of the guide portion (2) away from the cover body (200) in the first direction is L2, and an angle between the guide surface (21) and the first direction is A, in which L1, L2, H, and A satisfy:

$$A = \tan^{-1} \frac{L1 - L2}{2H}$$

8. The cover assembly according to any one of claims 1 to 6, wherein the guide portion (2) further comprises a first surface (22) surrounding the cavity (3), and an abutment surface (23) spaced apart from the connection portion in the first direction; and

wherein the abutment surface (23) connects the first surface (22) and the guide surface (21).

9. The cover assembly according to claim 8, wherein a distance between a joint of the abutment surface (23) and the first surface (22) and a joint of the abutment surface (23) and the guide surface (21) is L, wherein L satisfies 0.5 mm≤L≤0.8 mm.

10. The cover assembly according to claim 1, wherein the insulating member (100) comprises a via hole (5) for a battery post to pass through, and a pressure relief hole (6) for communicating with a pressure relief valve of the cover body (200).

11. A battery comprising the cover assembly according to any one of claims 1 to 10.

12. A battery pack comprising the battery according to claim 11.

1000

100

5

200

6

FIG. 1

100

4

L1

1

X

A

2

L2

3

22 23

21

FIG. 2

FIG. 3

FIG. 4